# NEUE EUROPÄISCHE PATENTSCHRIFT

(11) **EP 0 425 478 B2**
(45) Veröffentlichungstag und Bekanntmachung des Hinweises auf die Entscheidung über den Einspruch: **01.12.1999**
(45) Hinweis auf die Patenterteilung: 07.06.1995
(21) Anmeldenummer: 91100691.4
(22) Anmeldetag: 22.12.1984
(51) Int. Cl.: H02K 1/18, H02K 5/24, H02K 29/08, H02K 5/173

(54) **Au enläufermotor, insbesondere kollektorloser Gleichstrommotor**
External rotor motor, in particular collectorless direct-current motor
Moteur à rotor extérieur, en particulier moteur à courant continu sans collecteur

(30) Priorität: 28.12.1983 DE 3347360; 12.01.1984 US 570187
(43) Veröffentlichungstag der Anmeldung: 02.05.1991
(62) Teilanmeldung aus: 84116201.9
(73) Patentinhaber: Papst Licensing GmbH & Co. KG, 78549 Spaichingen (DE)
(72) Erfinder: von der Heide, Johann, Dipl.-Ing., W-7230 Schramberg (DE); Körner, Ernst-Moritz, W-7742 St. Georgen-Brigach (DE); Müller, Rolf, Dr.-Ing., W-7742 St. Georgen (DE)
(74) Vertreter: Schwan, Gerhard, Dipl.-Ing.

(56) Entgegenhaltungen:
- DE-A- 2 811 283
- DE-A- 3 135 385
- DE-A- 3 303 433
- DE-C- 1 283 345
- FR-A- 2 350 721
- GB-A- 1 310 981
- GB-A- 2 092 834
- JP-A- 58 127 552
- US-A- 3 483 407

## Beschreibung

Die Erfindung betrifft einen Außenläufermotor, insbesondere in Form eines kollektorlosen Außenläufer-Gleichstrommotors, der vorzugsweise zum Antrieb von Plattenspeichern bestimmt ist, sich aber auch für andere Antriebsaufgaben, vor allem im Bürobereich eignet, und der einen im wesentlichen zylindrischem Luftspalt zwischen einem Stator und einem Rotor hat, wobei der Stator einen Wicklungskern aufweist und an einem Lagertragteil für die Lagerung einer Rotorwelle mit Hilfe von zwei Kugellagern angebracht ist. Ein Außenläufermotor dieser Art ist aus GB-A-2092834 bekannt.

Aus DE-A-2811283 ist ferner ein Innenläufermotor bekannt, bei dem zur Herabsetzung der Schallabstrahlung von dem Ständergehäuse das Ständerblechpaket in dem Ständergehäuse von verteilt angeordneten Befestigungsmitteln abgestützt ist, welche das Ständerblechpaket allseitig in einem einen Ringspalt bildenden Abstand zum Ständergehäuse halten.

Die DE-PS 1 283 345 befaßt sich mit dem Problem, Pendelschwingungen des Ständers eines einseitig befestigten Außenläufermotors ohne zusätzliche Mittel in Tongerätequalität zu isolieren. Für diesen Zweck ist bei einem Außenläufermotor, der für die Lagerung des glockenförmigen Außenläufers eine im Blechpaket des Innenständers angeordnete und an ihrem einen Ende mit einem Befestigungsflansch versehene Lagerbuchse aufweist, diese Lagerbuchse an ihrem anderen, dem Befestigungsflansch gegenüberliegenden Ende mit dem Innenständer fest verbunden, im übrigen Bereich aber drehbeweglich gegenüber dem Ständer und drehelastisch, so daß die Lagerbuchse als Drehstab zur Schwingungsisolierung von Drehschwingungen des Ständers gegen den Befestigungsflansch wirkt. Zusätzlich zum einem zylindrischen Luftspalt zwischen Ständer und Außenläufer ist ein weiterer Luftspalt vorhanden, der den Ständer und die als Lagertragteil dienende Lagerbuchse im Bereich eines wesentlichen Teils ihrer einander zugewendeten Flächen voneinander trennt. Die Lagerung des bekannten Außenläufermotors besteht aus zwei Gleitlagern. Dabei füllt die Lagerbuchse den Ringraum zwischen der Mantelfläche des einen Gleitlagers und der Innenfläche des Ständers voll aus.

Die zulässigen Geräuschemissionen von Geräten, die am Arbeitsplatz im Büro stehen, werden immer weiter herabgesetzt. Insbesondere gilt dies für Arbeitsplatzrechner. In solche Rechner wird schon heute eine sehr hohe Rechner- und Speicherleistung eingebaut, und die Rechner sind in der Regel mit Plattenspeichern, insbesondere Hartplattenspeichern, und Lüftern ausgestattet. Die einzigen Komponenten, die in einem solchen Fall Geräusche emittieren, sind die Antriebsmotoren für die Plattenspeicher und Lüfter.

Man könnte daran denken, bei einem Plattenspeicher z.B. entweder den Motor als Ganzes weichelastisch aufzuhängen oder für die Lagerung der Rotorwelle vorgesehene Kugellager, die bekanntlich die Hauptgeräuschquelle darstellen, elastisch zu montieren. Beide Maßnahmen sind aber gerade bei einem Plattenspeicher nicht praktikabel, weil beispielsweise im Falle eines Hartplattenspeichers nicht wiederholbare Lageveränderungen der Rotorachse, d.h. der nicht wiederholbare Schlag, kleiner als zum Beispiel 1 µm sein müssen.

Der Erfindung liegt die Aufgabe zugrunde, einen für den Antrieb von Plattenspeichern, aber auch von anderen Geräten, geeigneten Außenläufermotor, insbesondere einen kollektorlosen Außenläufer-Gleichstrommotor, zu schaffen, der eine besonders niedrige Geräuschemission hat und der zugleich mit sehr kleinem nicht wiederholbarem Schlag ausgeführt werden kann.

Diese Aufgabe wird durch einen Außenläufermotor mit den Merkmalen des Anspruchs 1 gelöst.

Bei einem solchen Aufbau werden Lagergeräusche wirkungsvoll vermindert. In den Kugellagern entstehende Schallwellen werden nicht mehr am Stator reflektiert, und sie sind somit an einem Hin- und Herlaufen zwischen Lagerung und Stator gehindert.

Umgekehrt werden auch im Stator elektromagnetisch erzeugte Geräusche an einem Hin- und Herreflektieren zwischen dem Stator und der Lagerung der Rotorwelle gehindert.

Die elastische Dämpfungsanordnung ist bevorzugt mindestens näherungsweise im Bereich des einen Kugellagers angeordnet und axial kurz ausgebildet. Sie kann zweckmäßig eine weiche Vergußmasse zwischen dem Stator und dem vorzugsweisse rohrförmigen Lagerteil aufweisen, wobei die Vergußmasse vorteilhaft nach dem Aushärten ein mit dem Stator und/oder dem Lagertragteil formschlüssig verbundenes Zwischenstück bildet. Dieses Zwischenstück kann zweckmäßig Ringform haben. Eine solche Dämpfungsanordnung läßt sich fertigungsmäßig besonders einfach herstellen und sorgt gleichwohl für eine weitgehende Dämpfung zwischen Lagertragteil und Stator. Entsprechend einer abgewandelten Ausführungsform kann die elastische Dämpfungsanordnung auch ein oder mehrere vorgefertigte elastische Bauteile, insbesondere elastische O-Ringe, aufweisen. Für eine sichere Halterung des Stators am Lagertragteil greift vorzugsweise der O-Ring mit einem Teil seines Querschnitts in eine entsprechende Nut an den einander zugewendeten Flächen von Stator und/oder Lagertragteil ein. Vorzugsweise stehen der Stator und das Lagertragteil im wesentlichen nur im Bereich der elastischen Dämpfungsanordnung miteinander in Verbindung, während sie im übrigen durch den weiteren Luftspalt voneinander getrennt sind.

In weiterer Ausgestaltung der Erfindung weisen die beiden Kugellager eine unterschiedliche Anzahl von Kugeln auf. Dieses Merkmal senkt gleichfalls die Geräuschemission.

Wenn das Lagertragteil in bekannter Weise (GB-A-2 092 834) mit einem sich im wesentlichen senkrecht zu der Achse der Rotorwelle erstreckenden Befestigungsflansch verbunden ist, kann zur weiteren Geräuschreduzierung der Befestigungsflansch einen schalldämpfenden Belag aufweisen. Trägt der Befestigungsflansch, wie an sich ebenfalls bekannt (GB-A-2 092 834), eine Leiterplatte und/oder eine magnetische Abschirmung, kann der Befestigungsflansch in weiterer Ausgestaltung der Erfindung mit der Leiterplatte und/oder der magnetischen Abschirmung zu einem schalldämpfenden Mehrschichtkörper verbunden sein. Dabei kann zweckmäßig zwischen den Schichten des Mehrschichtkörpers eine welche Vergußmasse und/oder ein elastischer Kleber vorgesehen sein. Es zeigte sich, daß so eine wesentliche Geräuschminderung selbst dann möglich ist, wenn im Interesse der Genauigkeitsanforderung für die Position der Rotorachse mit Bezug auf den Befestigungsflansch der letzere und das Lagertragteil einstückig ausgebildet sind.

Weist bei dem vorliegenden Außenläufermotor der Rotor in an sich bekannter Weise (DE-A-31 44 629) ein im wesentlichen becherförmiges Rotorgehäuse auf, trägt zur Verminderung der Geräuschemission auch bei, wenn im Boden des Rotorgehäuses verteilte Öffnungen vorgesehen sind.

In weiterer Ausgestaltung der Erfindung sind bei einem als kollektorloser Außenläufer-Gleichstrommotor ausgebildeten Elektromotor, bei dem der Stator mit Statoreisen und einer Statorwicklung versehen ist, die bei Erregung ein Elektromagnetfeld erzeugt, bei dem der Rotor einen permanentmagnetischen Rotormagneten aufweist und bei dem zwischen Rotor und Stator elektromagnetische Kräfte wirken, wenn die Statorwicklung erregt wird, zur Geräuschminderung die magnetischen Komponenten von Rotor und Stator derart mit Bezug aufeinander angeordnet, daß die Summe der magnetischen Axialkräfte zwischen Rotor und Stator minimiert ist. Dadurch lassen sich zur Geräuschentwicklung beitragende magnetische Unsymmetrien unschädlich machen, die unter anderem durch eine becherförmige Ausbildung des Rotorgehäuses verursacht sein oder dadurch entstehen können, daß für die von der Rotorstellung abhängige Kommutierung der Ströme in den Motorwicklungen ein oder mehrere galvanomagnetische Sensoren, beispielsweise Hall-Generatoren oder Hall-lCs, benutzt werden, die im Einflußbereich des Rotormagnetfeldes liegen. In diesem Fall wird auf der dem oder den Sensoren zugekehrten Seite ein gewisser axialer Überstand des Rotormagneten notwendig, um eine für die Ansteuerung der Sensoren ausreichende Magnetflußdichte zu gewährleisten. Auf der gegenüberliegenden Seite wird der axiale Überstand dagegen zweckmäßig kleiner gehalten, um teueres Magnet material und/oder axiale Baulänge einzusparen. Man kommt so zu einem permanentmagnetischen Rotor, dessen zur Achse senkrechte, magnetisch wirksame Symmetrieebene mit Bezug auf die zur Achse senkrechte Symmetrieebene des Statoreisens axial versetzt ist. Die unterschiedliche Größe der axialen Überstände hat zur Folge, daß auf den Rotor, dessen Magnet sich magnetisch symmetrisch zu dem Statoreisen einzustellen sucht, eine Axialkraft ausgeübt wird. Diese Kraft ist im allgemeinen drehstellungsabhängig, beispielsweise weil der Luftspalt zwischen Rotor und Stator nicht überall gleiche Abmessungen hat. Dies kann dann zu elektromagnetisch erzeugten Geräuschen führen. Dem kann in weitererAusgestaltung der Erfindung dadurch begegnet werden, daß der Stator ein Endblech trägt, das zur axialen Symmetrierung des Magnetfeldes mit dem Rotormagneten zusammenwirkt und vorzugsweise mindestens einen Teil des Luftspalts im Bereich des größeren Überstandes begrenzt.

Entsprechend einer abgewandelten Ausführungsform der Erfindung lassen sich elektromagnetisch bedingte Geräusche dadurch reduzieren, daß im Bereich des größeren axialen Überstandes des Rotormagneten über die Stirnseiten des Statoreisens die Induktion im mittleren Teil der Rotormagnetpole mindestens bereichsweise schwächer gemacht wird als an den an die Pollücken angrenzenden Randbereichen der Rotormagnetpole. Auch dadurch läßt sich eine Axialkraftsymmetrierung erzwingen, während gleichzeitig ein sicheres Ansprechen der Drehstellungssensoren gewährleistet ist. Wesentlich ist, daß eine magnetische Symmetrierung insgesamt derart erfolgt, daß die Summe der magnetischen Axialkräfte zwischen Rotor und Stator beim fertig montierten Motor möglichst klein, vorzugsweise Null, ist.

Die Erfindung ist im folgenden anhand von bevorzugten Ausführungsbeispielen näher erläutert In den beiliegenden Zeichnungen zeigen:
- Fig. 1: einen Schnitt durch einen erfindungsgemäß aufgebauten Antriebsmotor für einen Hartplattenspeicher,
- Fig. 2: eine Teilabwicklung des Rotormagneten des Motors nach Fig. 1,
- Fig. 3: in größerem Maßstab einen Teilschnitt durch den Befestigungsflansch des Motors nach Fig. 1 mit Leiterplatte und magnetischer Abschirmung,
- Fig. 4: eine abgewandelte Ausführungsform ähnlich Fig. 1 im Schnitt, und
- Fig. 5: eine Draufsicht auf die Unterseite eines Rotorgehäuses des Motors.

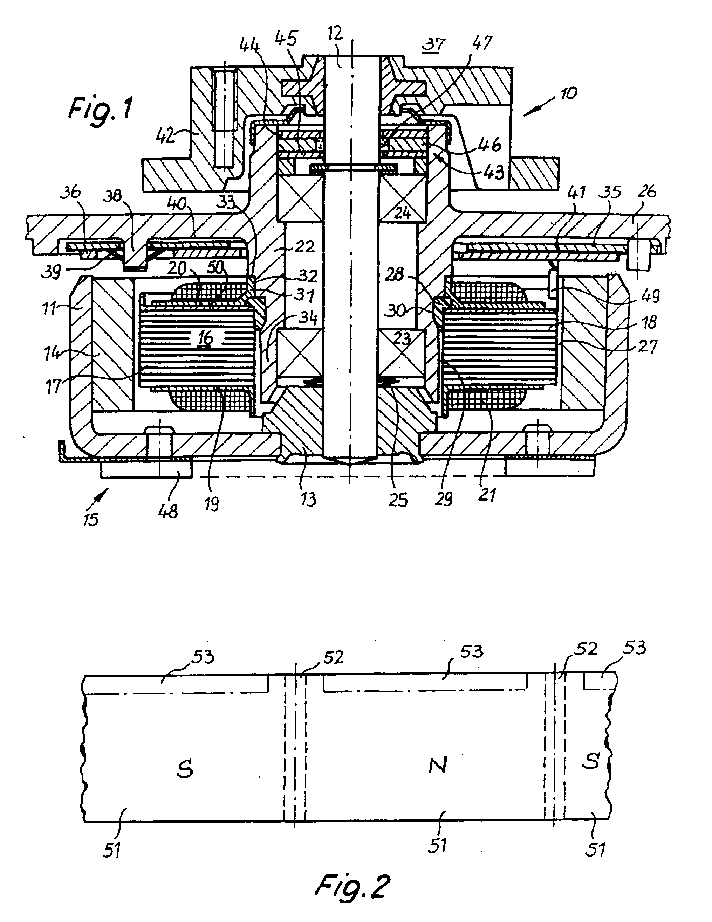

In Fig. 1 ist ein als kollektorloser Gleichstrommotor aufgebauter Außenläufer-Direktantriebsmotorfür Festplattenspeicher veranschaulicht, der insgesamt mit 10 bezeichnet ist. Der Motor weist ein becherförmiges Rotorgehäuse 11 auf, das konzentrisch zu einer Rotorwelle 12 sitzt und mit dieser über eine Buchse 13 fest verbunden ist, die in eine Mittelöffnung des Rotorgehäuses eingepreßt ist. In dem aus magnetisch gut leitendem Werkstoff bestehenden Rotorgehäuse 11 sind eine Mehrzahl von Permanentstücken oder ein einteiliger Permanentring 14 angebracht, der zusammen mit den Bauteilen 11 bis 13 den Rotor 15 des Motors 10 bildet. Der Permanentmagnetring 14 besteht vorzugsweise aus einer Mischung von Hartferrit, z.B. Bariumferrit, und elastischem Material. Es handelt sich also um einen sogenannten Gummimagneten. Dieser ist über der Polteilung trapezförmig oder annähernd trapezförmig bei relativ kleiner Pollücke radial magnetisiert. Das Rotorgehäuse 11 kann als Tiefziehteil hergestellt sein.

Zu dem Stator 16 des Motors 10 gehört insbesondere ein Wicklungskern 17, der aus dem eigentlichen Statoreisen 18, im allgemeinen in Form eines Statorblechpakets, sowie aus Endscheiben 19, 20 besteht und der eine Statorwicklung 21 trägt. Der Wicklungskern 17 ist an einem rohrförmigen Lagertragteil 22 abgestützt. Die Rotorwelle 12 ist in dem Lagertragteil 22 mit Hilfe von zwei Kugellagern 23, 24 gelagert, die sich mit ihren einander zugewendeten Stirnseiten an entsprechenden Schultern des Lagertragteils 22 abstützen und die unterschiedliche Anzahlen von Kugeln aufweisen. Eine Tellerfeder 25 legt sich gegen die Unterseite des Innenrings des Kugellagers 23 und die diesem Kugellager zugewendete Stirnseite der Buchse 13 an, wodurch die Kugellager axial gegeneinander verspannt werden. Das Lagertragteil bildet zusammen mit einem Befestigungsflansch 26 ein einstückiges Druckgußteil. Statt dessen kann das Lagertragteil auch mit Preßsitz in einer mit dem Befestigungsflansch verbundenen Nabe sitzen oder mit dem Befestigungsflansch auf andere Weise fest verbunden, Z.B. verlötet sein. Der Magnetring 14 und der Wicklungskern 17 begrenzen einen im wesentlichen zylindrischen Luftspalt 27.

Wie aus Fig. 1 hervorgeht, ist der Stator 16 mit dem Lagertragteil 22 über eine elastische Dämpfungsanordnung verbunden, die axial oberhalb des Kugellagers 23 sitzt und aus einem ringförmigen Zwischenstück 28 aus einer weichen Vergußmasse besteht. In dem in Fig. 1 axial unterhalb des Zwischenstücks 28 liegenden Bereich sind der Stator 16 und das Lagertragteil 22 durch einen engen Luftspalt 29 voneinander getrennt. Bei der Montage des Motors 10 wird zweckmäßig zunächst in eine Rille 30 an der Mantelfläche des Lagertragteils 22 eine Raupe aus einer elastischen Vergußmasse, beispielsweise aus einem Polyurethan-Härter-Gemisch, eingebracht. Dann wird der Stator 16 auf das Lagertragteil 22 aufgeschoben, bis sich ein ringförmiger Ansatz 31 der Endscheibe 20 mit seiner Innenfläche gegen einen Abschnitt 32 der Mantelfläche des Lagertragteils 22 sowie mit seiner Stirnfläche gegen eine Schulter 33 des Lagertragteils 22 anlegt. Der Stator 16 wird mit Bezug auf die Achse der Rotorwelle 12 zentriert. Anschließend wird die Vergußmasse ausgehärtet. Das auf diese Weise entstandene elastische Zwischenstück 28 sorgt für eine formschlüssige Verbindung von Stator 16 und Lagertragteil 22, die in Verbindung mit dem Luftspalt 29 die Schallschwingungsübertragung zwischen den Bauteilen 16, 22 wirkungsvoll dämpft. Die mechanische Verbindung der Bauteile 16, 22 befindet sich bei der Ausführungsform der Fig. 1 an einer Stelle, die vom Ort der Hauptgeräuschquelle axial in Abstand liegt. Die Wand des Lagertragteils 22 kann im Bereich der Anlagezone 34 des Außenringes des Kugellagers 23 elastisch ausweichen. All dies trägt zur wesentlichen Minderung der Geräuschemission bei.

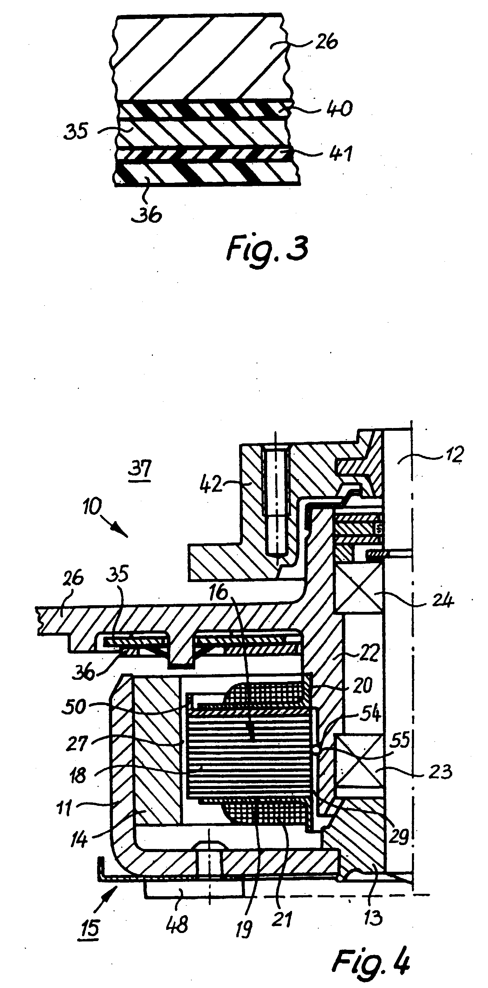

An der Unterseite des Befestigungsflanschs 26 befinden sich ein Abschirmblech 35 aus magnetisch gut leitendem Werkstoff und eine gedruckte Leiterplatte 36. Das Abschirmblech 35 verhindert in Verbindung mit dem Rotorgehäuse 11 und dem Kugellager 24 den Austritt von, magnetischen Streufeldern in den von den Hartspeicherplattenen eingenommenen Raum 37. Auf der Leiterplatte 36 sitzen die Antriebselektronik und gegebenenfalls eine Drehzahlmgelschaltung, die nicht näher veranschaulicht sind. Der beispielsweise als Aluminiumdruckguß bestehende Befestigungsflansch 26 weist Nasen 38 auf, die durch Ausnehmungen der Bauteile 35, 36 hindurchragen und auf die Federklemmen 39 zum Halten des Abschirmbleches 35 aufgesetzt sind. Zwischen den Befestigungsflansch 26 und des Abschirmblech 35 ist, wie deutlicher aus Fig. 3 hervorgeht, eine Lage 40 aus Vergußmasse, beispielsweise Polyurethan, eingebracht, während sich zwischen, dem Abschirmblech 35 und der Leiterplatte 36 eine Lage 41 aus Epoxidkleber oder einem anderen schalldämpfenden Material befindet. Der Befestigungsflansch 26, das Abechirmblech 35 und die Leiterplatte 36 sind auf diese Weise zu einem schalldämpfenden Mehrschlchtkörper miteinander verbunden. Es versteht sich, daß gegebenenfalls auch das Abschirmblech und die Leiterplatte ihre Plätze vertauschen können. Daneben können beide Lagen 40, 41 aus Vergußmasse, aus Kleber oder einem sonstigen Schallschwingungen dämpfenden Werkstoff bestehen.

Der Befestigungsflansch 26 gestattet es, den Motor 10 an einer Trennwand eines Hartplattenspeichers anzubringen, die in bekannter Weise (z.B. DE-A- 31 08 204) den Raum 37 vom übrigen Geräteinneren abtrennt. Eine zur Aufnahme einer oder mehrerer Hartspeicherplatten dienende Nabe 42 ist mit dem in Fig. 1 oberen Ende der Rotorwelle 12 fest verbunden. Um das Lagersystem der Rotorwelle 12 gegenüber dem Speicherlattenaufnahmeraum abzudichten, ist im Bereich zwischen der Nabe 42 und dem Lager 24 eine Magnetflüssigkeitsdichtung 43 in das Lagertragteil 22 eingesetzt. Die Dichtung 43 besteht aus zwei Polstücken 44, 45, einem zwischen den Polstücken sitzenden Permanentmagnetring 46 und einer magnetischen Flüssigkeit, die in einen Ringspalt 47 zwischen dem Magnetring 46 und der Rotorwelle 12 eingebracht ist. An der Außenseite des Bodens des Rotorgehäuses 11 ist ein Radialgebläserad 48 befestigt, das Luft im zentralen Bereich anzieht und radial nach außen schleudert

Entsprechend Fig. 1 ist für die Steuerung der Kommutierung des Motors 10 ein galvanomagnetischer Drestellungssensor, z.B. in Form eines Hallgenerators 49 vorgesehen, der an der Leiterplatte 36 angelötet ist und durch das Feld des Magnetringes 14 beeinflußt wird. Um den Sensor 49 sicher ansprechen zu lassen, steht der Rotormagnet 14 auf der der Leiterplatte 36 zugewendeten Seite über das Statoreisen 18 weiter axial über als an der dem Boden des Rotorgehäuses 11 zugekehrten Seite. Um dadurch hervorgerufenen axialen Störkräften entgegenzuwirken, die gleichfalls Anlaß zu Geräuschen sein können, ist auf der Seite größeren axialen überstandes ein Statorendblech 50 vorgesehen. Das Endblech 50 ragt in den Bereich des axial weiter überstehenden Magneten 14 hinein und begrenzt dort in einer vorbestimmten Teilzone den Luftspalt 27. Auf diese Weise erfolgt eine Symmetrierung des Magnetfeldes. Zusätzlich oder statt dessen kann der Rotormagnet 14 im Bereich des größeren axialen Überstandes gezielt teilentmagnetisiert sein, wie dies in der Abwicklung gemäß Fig. 2 angedeutet ist. Dabei sind die Rotormagnetpole mit 51, die Pollücken mit 52 und die Bereiche mit abgeschwächter Induktion mit 53 bezeichnet Die Teilentmagnetisierungsbereiche 53 enden jeweils in einem Abstand von den Pollücken. Daher ist ein einwandfreies Ansprechen sprechen des Sensors 49 gewährleistet, während die Teilentmagnetisierung bezüglich der magnetischen Axialkräfte wie eine Verkürzung des größeren überstandes wirkt.

Die Ausführungsform gemäß Fig. 4 stimmt mit der jenigen der Fig. 1 mit derAusnahme überein, daß anstelle des Zwischenstückes 28 ein O-Ring 54 vorgesehen ist. Der O-Ring 54 greift in eine Ringnut 55 an der Mantelfläche des Lagertragteils 22 ein. Gegebenenfalls kann eine entsprechende Nut auch in dem Statoreisen vorgesehen sein.

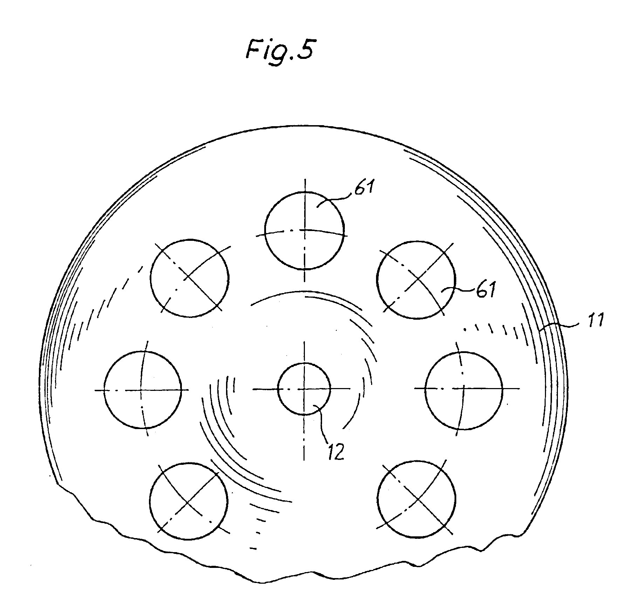

Fig. 5 zeigt die Unterseite eines Rotorgehäuses 11 mit im Boden des Rotorgehäuses 11 verteilten Öffnungen 61. Das mit den Öffnungen 61 ausgestattete Rotorgehäuse 11 stellt eine Umkehrung des Prinzips eines Kolbenlautsprechers in einer geschlossenen Box dar. Vorzügsweise sind sieben äquidistant angeordnete Öffnungen vorgesehen.

## Patentansprüche

1. Außenläufermotor, insbesondere kollektorloser Außenläufer-Gleichstrommotor, mit im wesentlichen zylindrischem Luftspalt (27) zwischen einem Stator (16) und einem Rotor (15), wobei der Stator einen Wicklungskern (17) aufweist und an einem Lagertragteil (22) für die Lagerung einer Rotorwelle (12) mit Hilfe von zwei Kugellagern (23, 24) angebracht ist, dadurch gekennzeichnet, daß der Wicklungskern (17) einen axialen Abschnitt des Lagertragteils (22) umgreift, innerhalb dessen eines (23) der beiden Kugellager (23, 24) sitzt, der Stator (16) mit dem Lagertragteil (22) über eine elastische Dämpfungsanordnung (28, 54) verbunden ist sowie der Stator (16) und das Lagertragteil (22) im Bereich mindestens eines wesentlichen Teils ihrer einander zugewendeten Flächen durch einen weiteren Luftspalt (29) voneinander getrennt sind, der sich über einen großen Teil der axialen Statoreisenlänge erstreckt und der den Stator (16) und das Lagertragteil (22) in dem dem einen Kugellager (23) benachbarten Bereich radial voneinander trennt.

2. Außenläufermotor nach Anspruch 1, bei dem die elastische Dämpfungsanordnung (28, 54) sich mindestens näherungsweise im Bereich des einen Kugellagers (23) befindet.

3. Außenläufermotor nach Anspruch 1 oder 2, bei dem die elastische Dämpfungsanordnung (28, 54) axial kurz ausgebildet ist.

4. Außenläufermotor nach einem der vorhergehenden Ansprüche, bei dem das Lagertragteil (22) rohrförmig ausgebildet ist.

5. Außenläufermotor nach einem der Ansprüche 1 bis 4, bei dem die elastische Dämpfungsanordnung (28) eine weiche Vergußmasse zwischen dem Stator (16) und dem Lagertragteil (22) aufweist.

6. Außenläufermotor nach Anspruch 5, bei dem die Vergußmasse nach dem Aushärten ein mit dem Stator (16) und/oder dem Lagertragteil (22) formschlüssig verbundenes Zwischenstück (28) bildet.

7. Außenläufermotor nach Anspruch 6, bei dem das Zwischenstück (28) Ringform hat.

8. Außenläufermotor nach einem der Ansprüche 1 und 2, bei dem die elastische Dämpfungsanordnung einen oder mehrere elastische O-Ringe (54) aufweist.

9. Außenläufermotor nach Anspruch 8, bei dem der O-Ring (54) mit einem Teil seines Querschnitts in eine entsprechende Nut (55) an den einander zugewendeten Flächen von Stator (16) und/oder Lagertragteil (22) eingreift.

10. Außenläufermotor nach einem der Ansprüche 1 bis 9, bei dem der Stator (16) und das Lagertragteil (22) im wesentlichen nur im Bereich der elastischen Dämpfungsanordnung (28, 54) miteinander in Verbindung stehen und im übrigen durch den weiteren Luftspalt (29) voneinander getrennt sind.

11. Außenläufermotor nach einem oder mehreren der vorhergehenden Ansprüche, bei dem die beiden Kugellager (23, 24) eine unterschiedliche Anzahl von Kugeln aufweisen.

12. Außenläufermotor nach einem oder mehreren der vorhergehenden Ansprüche, bei dem das Lagertragteil (22) mit einem sich im wesentlichen senkrecht zu der Achse der Rotorwelle (12) erstreckenden Befestigungsflansch (26) verbunden ist und der Befestigungsflansch einen schalldämpfenden Belag (35, 36, 40, 41) aufweist.

13. Außenläufermotor nach Anspruch 12, bei dem der Befestigungsflansch (26) eine Leiterplatte (36) und/oder eine magnetische Abschirmung (35) trägt und der Befestigungsflansch mit der Leiterplatte und/oder der magnetischen Abschirmung zu einem schalldämpfenden Mehrschichtkörper verbunden ist.

14. Außenläufermotor nach Anspruch 13, bei dem zwischen den Schichten (26, 35, 36) des Mehrschichtkörpers eine weiche Vergußmasse (40) und/oder ein elastischer Kleber (41) vorgesehen sind.

15. Außenläufermotor nach einem der Ansprüche 12 bis 14, bei dem der Befestigungsflansch (26) und das Lagertragteil (22) einstückig ausgebildet sind.

16. Außenläufermotor nach einem oder mehreren der vorhergehenden Ansprüche, bei dem der Rotor (15) ein im wesentlichen becherförmiges Rotorgehäuse (11) aufweist, in dessen Boden verteilte Öffnungen (61) vorgesehen sind.

17. Außenläufermotor nach einem oder mehreren der vorhergehenden Ansprüche, der als kollektorloser Außenläufer-Gleichstrommotor ausgebildet ist, bei dem der Stator (16) mit Statoreisen (18) und einer Statorwicklung (21) versehen ist, die bei Erregung ein Elektromagnetfeld erzeugt, bei dem der Rotor (15) einen permanentmagnetischen Rotormagneten (14) aufweist, bei dem zwischen Rotor und Stator elektromagnetische Kräfte wirken, wenn die Statorwicklung erregt wird, und bei dem zur Geräuschminderung die magnetischen Komponenten von Rotor (15) und Stator (16) derart mit Bezug aufeinander angeordnet sind, daß die Summe der magnetischen Axialkräfte zwischen Rotor und Stator minimiert ist.

18. Außenläufermotor nach Anspruch 17, bei dem ein mit Bezug auf eine Axialsymmetriebene des Statoreisens (18) unsymmetrisch angeordneter permanentmagnetischer Rotor (15) vorgesehen ist.

19. Außenläufermotor nach Anspruch 17 oder 18, bei dem der Stator (16) ein Endblech (50) trägt, das zur axialen Symmetrierung des Magnetfeldes mit dem Rotormagneten (14) zusammenwirkt.

20. Außenläufermotor nach Ansprüchen 18 und 19, bei dem der Rotormagnet (14) über das Statoreisen (18) an dessen beiden Stirnseiten unterschiedlich weit axial übersteht und bei dem das Endblech (50) mindestens einen Teil des Luftspalts (27) im Bereich des größeren Überstandes begrenzt.

21. Außenläufermotor nach einem der vorhergehenden Ansprüche, bei dem der Rotormagnet (14) über das Statoreisen (18) an dessen beiden Stirnseiten unterschiedlich weit axial übersteht und im Bereich des größeren Überstandes die Induktion im mittleren Teil der Rotormagnetpole (51) mindestens bereichsweise schwächer ist als an den an die Pollücken (52) angrenzenden Randbereichen der Rotormagnetpole.

## Claims

1. An external rotor motor, particularly a commutatorless external rotor direct current motor with a substantially cylindrical air gap (27) between a stator (16) and a rotor (15), the stator comprising a winding core (17) and being mounted on a bearing support part (22) for the mounting of a rotor shaft (12) by means of two ball-bearings (23, 24), characterised in that the winding core (17) engages around an axial portion of the bearing support part (22) within which one (23) of the two ball-bearings (23, 24) is seated, the stator (16) being connected to the bearing support part (22) via an elastic damping arrangement (28, 54) while the stator (16) and the bearing support part (22) are in the region of at least one essential part of their mutually facing surfaces, separated from each other by a further air gap (29) which extends over a major part of the axial length of the stator iron and radially separates from each other the stator (16) and the bearing support part (22) in the region adjacent to a ball-bearing (23).

2. An external rotor motor according to Claim 1, in which the elastic damping arrangement (28, 54) is disposed at least approximately in the region of one ball-bearing (23).

3. An external rotor motor according to Claim 1 or 2, in which the elastic damping arrangement (28, 54) is of axially short construction.

4. An external rotor motor according to one of the preceding Claims, in which the bearing support part (22) is of tubular construction.

5. An external rotor motor according to one of Claims 1 to 4, in which the elastic damping arrangement (28) comprises a soft casting material between the stator (16) and the bearing support part (22).

6. An external rotor motor according to Claim 5 in which the casting material, after it has hardened, forms an intermediate member (28) which is positively connected to the stator (16) and/or the bearing support part (22).

7. An external rotor motor according to Claim 6 in which the intermediate part (28) is of annular shape.

8. An external rotor motor according to one of Claims 1 and 2, in which the elastic damping arrangement comprises one or a plurality of elastic O-rings (54).

9. An external rotor motor according to Claim 8, in which the O-ring (54) has part of its cross-section engaging a corresponding groove (55) on the mutually facing surfaces of stator (16) and/or bearing support part (22).

10. An external rotor motor according to one of Claims 1 to 9, in which the stator (16) and the bearing support part (22) are connected to each other substantially only in the region of the elastic damping arrangement (28, 54) and are otherwise separated from each other by the further air gap (29).

11. An external rotor motor according to one or more of the preceding Claims, in which the two ball-bearings (23, 24) have a different number of balls.

12. An external rotor motor according to one or more of the preceding Claims, in which the bearing support part (22) is connected to a fixing flange (26) extending substantially at right-angles to the axis of the rotor shaft (12), the fixing flange comprising a sound-damping covering (35, 36, 40, 41).

13. An external rotor motor according to Claim 12, in which the fixing flange (26) carries a circuit board (36) and/or a magnetic shield (35), the fixing flange with the circuit board and/or the magnetic shield being connected to form one sound-damping multi-layer body.

14. An external rotor motor according to Claim 13 in which a soft casting material (40) and/or an elastic adhesive (41) are provided between the layers (26, 35, 36) of the multi-layer body.

15. An external rotor motor according to one of Claims 12 to 14, in which the fixing flange (26) and the bearing support part (22) are constructed in one piece.

16. An external rotor motor according to one or more of the preceding Claims, in which apertures (61) are distributed over the bottom of the substantially cup-shaped rotor housing (11) which accommodates the rotor (15).

17. An external rotor motor according to one or more of the preceding Claims, which is constructed as a commutatorless external rotor direct current motor in which the stator (16) is provided with stator iron (18) and stator winding (21) which, when energised, generates an electromagnetic field, wherein the rotor (15) comprises a permanent magnetic rotor magnet (14) and wherein electromagnetic forces act between rotor and stator when the stator winding is energised and wherein, in order to reduce noise, the magnetic components of rotor (15) and stator (16) are so disposed in respect of each other that the sum of the magnetic axial forces between rotor and stator is minimised.

18. An external rotor motor according to Claim 17 in which a permanent magnetic rotor (15) is provided which is asymmetrically disposed in relation to a plane of axial symmetry of the stator iron (18).

19. An external rotor motor according to Claim 17 or 18 in which the stator (16) carries an end plate (50) which cooperates with the rotor magnet (14) for axial symmetrisation of the magnetic field.

20. An external rotor motor according to Claims 18 and 19 in which the rotor magnet (14) projects to a varying axial degree beyond the two ends of the stator iron (18) and in which the end plate (50) defines at least one part of the air gap (27) in the region of the greater projection.

21. An external rotor motor according to one of the preceding Claims, in which the rotor magnet (14) projects to a varying axial extent beyond the two ends of the stator iron (18) and in the region of the greater projection the induction in the middle part of the rotor magnetic poles (51) is weaker at least in some areas than at those marginal areas of the rotor magnetic poles which are adjacent the pole clearances (52).

## Revendications

1. Moteur à induit extérieur, notamment moteur à induit extérieur à courant continu sans collecteur, comprenant une fente d'aération (27) essentiellement cylindrique entre un stator (16) et un rotor (15), le stator présentant un noyau d'enroulement (17) et étant fixé à un élément de support (22) des paliers servant à monter un arbre (12) de rotor à l'aide de deux roulements à billes (23, 24), caractérisé en ce que le noyau d'enroulement (17) entoure une section axiale de l'élément de support (22), dans laquelle est fixé un (23) des deux roulements à billes (23, 24), le stator (16) est relié à l'élément de support (22) des paliers par le biais d'un dispositif d'amortissement élastique (28, 54), et le stator (28) et l'élément de support (22) des paliers sont séparés, dans une zone d'une grande partie au moins de leurs surfaces qui se font face, par une autre fente d'aération (29), qui s'étend sur une grande partie de la longueur du fer statorique et qui sépare radialement le stator (16) et l'élément de support (22) des paliers dans la zone voisine de l'un des roulements à billes (23).

2. Moteur à induit extérieur selon la revendication 1, dans lequel le dispositif d'amortissement élastique (28, 54) se trouve au moins au voisinage de la zone de l'un des roulements à billes (23).

3. Moteur à induit extérieur selon la revendication 1 ou 2, dans lequel le dispositif d'amortissement élastique (28, 54) est réalisé de façon courte axialement.

4. Moteur à induit extérieur selon l'une des revendications antérieures, dans lequel l'élément de support (22) des paliers est réalisé sans forme de tube.

5. Moteur à induit extérieur selon l'une des revendications 1 à 4, dans lequel le dispositif d'amortissement élastique (28) présente une masse de scellement tendre entre le stator (16) et l'élément de support (22) des paliers.

6. Moteur à induit extérieur selon la revendication 5, dans lequel la masse de scellement une fois durcie forme une pièce intercalaire (28) reliée avec un engagement positif au stator (16) et/ou à l'élément de support (22) des paliers.

7. Moteur à induit extérieur selon la revendication 6, dans lequel la pièce intercalaire (28) a une forme circulaire.

8. Moteur à induit extérieur selon l'une des revendications 1 et 2, dans lequel le dispositif d'amortissement élastique présente un ou plusieurs joints toriques d'étanchéité (54).

9. Moteur à induit extérieur selon la revendication 8, dans lequel le joint torique d'étanchéité (54) est logé avec une partie de sa section dans une rainure (55) correspondante sur les surfaces se faisant face du stator (16) et/ou de l'élément de support (22) des paliers.

10. Moteur à induit extérieur selon l'une des revendications 1 à 9, dans lequel le stator (16) et l'élément de support (22) des paliers ne sont reliés, pour l'essentiel, que dans la zone du dispositif d'amortissement élastique (28, 54) et sont par ailleurs séparés l'un de l'autre par la seconde fente d'aération (29).

11. Moteur à induit extérieur selon l'une ou plusieurs des revendications précédentes, dans lequel les deux roulements à billes (23, 24) présentant un nombre de billes différent.

12. Moteur à induit extérieur selon l'une ou plusieurs des revendications précédentes, dans lequel l'élément de support (22) des paliers est relié à une bride de fixation (26) s'étendant essentiellement perpendiculairement à l'axe de l'arbre (12) du rotor, et dont la bride de fixation présente une garniture amortissant les bruits (35, 36, 40, 41).

13. Moteur à induit extérieur selon la revendication 12, dans lequel la bride de fixation (26) porte une plaque de circuits imprimés (36) et/ou un écran antimagnétique (35) et dont la bride de fixation est reliée à la plaquette de circuits imprimés et/ou à l'écran antimagnétique pour former un corps multicouche amortissant les bruits.

14. Moteur à induit extérieur selon la revendication 13, dans lequel sont prévues une masse de scellement tendre (40) et/ou une colle élastique (41) entre les couches (26, 35, 36) du corps multicouche.

15. Moteur à induit extérieur selon l'une des revendications 12 à 14, dans lequel la bride de fixation (26) et l'élément de support (22) des paliers sont réalisés d'un seul tenant.

16. Moteur à induit extérieur selon l'une ou plusieurs des revendications précédentes, dans lequel le rotor (15) présente un carter (11) essentiellement en forme de coupe dans le fond duquel sont réparties des ouvertures (61).

17. Moteur à induit extérieur selon l'une ou plusieurs des revendications précédentes, qui est réalisé en tant que moteur à induit extérieur à courant continu sans collecteur, dans lequel le stator (16) est muni d'un fer statorique (18) et d'un enroulement statorique (21) qui, lorsqu'il est excité, produit un champ électromagnétique, dont le rotor (15) présente un aimant (14) aimanté en permanence, entre le rotor et le stator duquel agissent des forces électromagnétiques lorsque l'enroulement statorique est excité, et dont les composants magnétiques du rotor (15) et du stator (16) sont disposés l'un par rapport à l'autre de manière à ce que la somme des forces magnétiques axiales entre le rotor et le stator soit aussi faible que possible, afin de réduire les bruits.

18. Moteur à induit extérieur selon la revendication 17, dans lequel est prévu un rotor (15) aimanté en permanence disposé de façon dissymétrique par rapport au plan de symétrie axiale du fer statorique (18).

19. Moteur à induit extérieur selon la revendication 17 ou 18, dans lequel le stator (16) porte une tôle d'extrémité (50) qui coopère avec l'aimant (14) du rotor pour donner au champ magnétique une symétrie axiale.

20. Moteur à induit extérieur selon les revendications 18 et 19, dans lequel l'aimant (14) du rotor dépasse axialement des faces frontales du fer statorique (18) sur des distances différentes, et dont la tôle d'extrémité (50) délimite au moins une partie de la fente d'aération (27) dans la zone où l'aimant dépasse le plus.

21. Moteur à induit extérieur selon l'une des revendications précédentes, dans lequel l'aimant (14) du rotor dépasse axialement des faces frontales du fer statorique (18) sur des distances différentes et dont l'induction, dans la zone où l'aimant dépasse le plus, est plus faible, au moins dans certaines zones de la partie centrale des pôles magnétiques (51) du rotor, que dans les zones du bord des pôles magnétiques du rotor qui sont adjacentes aux espaces interpolaires (52).
